# EUROPEAN PATENT APPLICATION

(11) **EP 4 675 445 A1**
(43) Date of publication of application: **07.01.2026**
(21) Application number: 23924880.0
(22) Date of filing: 23.08.2023
(51) Int. Cl.: G06F 13/28, G06F 13/38, G06F 13/42

(54) **SPI-BASED DATA TRANSMISSION METHOD, CHIP, CONTROLLER, AND STORAGE MEDIUM**

(30) Priority: 28.02.2023 CN 202310224153
(71) Applicant: BYD Company Limited, Shenzhen, Guangdong 518118 (CN)
(72) Inventor: CHENG, Chen, Shenzhen, Guangdong 518118 (CN); WANG, Xupeng, Shenzhen, Guangdong 518118 (CN); HAN, Bing, Shenzhen, Guangdong 518118 (CN); JI, Jiagang, Shenzhen, Guangdong 518118 (CN); TANG, Chongpeng, Shenzhen, Guangdong 518118 (CN)
(74) Representative: Mathys & Squire
(86) International application number: PCT/CN2023/114424
(87) International publication number: WO 2024/178923

(57) **Abstract**

An SPI-based data transmission method, a chip, a controller, and a storage medium, relating to the technical field of communications. The method includes: receiving a first side trigger signal sent by a second device in a communication system based on a second valid data block to be exchanged; based on the first side trigger signal, preparing a first side data block, wherein the first side data block includes a valid data block or an invalid data block; and in one data interaction process, sending the first side data block to the second device, and receiving a second side data block sent by the second device and corresponding to a second valid data block.

## Description

### CROSS-REFERENCE TO RELATED APPLICATIONS

The present disclosure claims priority to Chinese Patent Application No. 202310224153.3, filed on February 28, 2023, entitled "SPI-BASED DATA TRANSMISSION METHOD, CHIP, CONTROLLER, AND STORAGE MEDIUM", which is incorporated herein by reference in its entirety.

### FIELD

The present disclosure relates to the field of communication technology, and in particular, to an SPI-based data transmission method, a chip, a controller, and a storage medium.

### BACKGROUND

In the related art, in response to data being exchanged between an SPI slave device and an SPI master device based on the SPI (Serial Peripheral Interface) protocol, first, the master device receives a trigger signal from the slave device, and the master device prepares an invalid data block to exchange with a valid data block of the slave device; second, the slave device receives a trigger signal from the master device, and the slave device prepares an invalid data block to exchange with a valid data block of the master device.

It can be seen that in the related art, the exchange process of the valid data block and the invalid data block needs to be performed twice between the master device and the slave device, and the data transmission efficiency needs to be improved.

### SUMMARY

The present disclosure is intended to solve one of technical problems in the related art at least to some extent. Accordingly, the present disclosure provides an SPI-based data transmission method, a chip, a controller, and a storage medium.

The present disclosure provides an SPI-based data transmission method applied to a first device of an SPI communication system, and the method includes:
a first side trigger signal sent by a second device in the communication system based on a second valid data block to be exchanged is received;
a first side data block is prepared based on the first side trigger signal, and the first side data block includes a valid data block or an invalid data block;
in one data interaction process, the first side data block is sent to the second device and a second side data block sent by the second device and corresponding to the second valid data block is received.

In an embodiment, that a first side data block is prepared based on the first side trigger signal includes:
in response to the first side trigger signal, it being determined whether or not the first device has a first valid data block to be exchanged;
the first valid data block is prepared as the first side data block if the first device has the first valid data block;
the invalid data block is prepared as the first side data block if the first device does not have the first valid data block.

In an embodiment, the first device has a first sending buffer and a second sending buffer; that the first valid data block is prepared as the first side data block includes:
the first valid data block is written from the first sending buffer into the second sending buffer to prepare the first side data block.

In an embodiment, that the invalid data block is prepared as the first side data block includes:
the invalid data block of a preset length is written into the second sending buffer to prepare the first side data block.

In an embodiment, that it is determined whether or not the first device has a first valid data block to be exchanged includes:
it is determined whether or not the first sending buffer has the first valid data block;
if the first sending buffer has the first valid data block, it is determined that the first device has the first valid data block to be exchanged;
if the first sending buffer does not have the first valid data block, it is determined that the first device does not have the first valid data block to be exchanged.

In an embodiment, before the first valid data block is written from the first sending buffer into the second sending buffer, the method further includes: a message to be sent is obtained; the message is encapsulated into a plurality of data frames; the plurality of data frames are written into a data block; the data block is buffered into the first sending buffer.

In an embodiment, the first device further has a first receiving buffer and a second receiving buffer; that a second side data block sent by the second device and corresponding to the second valid data block is received includes: the second side data block is received to the first receiving buffer; the second side data block in the first receiving buffer is written into the second receiving buffer.

In an embodiment, the method further includes: the second sending buffer and the first receiving buffer are cleared in response to writing the second side data block into the second receiving buffer being completed.

In an embodiment, the first device is an SPI slave device and the second device is an SPI master device.

After a first side data block is prepared based on the first side trigger signal, the method further includes: a second side trigger signal is sent to the second device to cause the second device to prepare the second valid data block as the second side data block.

In an embodiment, in response to it being determined that receiving the second side data block is completed, the method further includes: the current reception count of the first side trigger signal is subtracted by one; in response to it being determined that the first side trigger signal is received, the method further includes: the current reception count of the first side trigger signal is added by one; that a first side data block is prepared based on the first side trigger signal includes: the first side data block is prepared in response to the current reception count of the first side trigger signal being greater than zero.

In an embodiment, the SPI slave device is configured with a first thread and a second thread; the first thread is configured to receive the first side trigger signal, prepare the first side data block, send the first side data block, and receive the second side data block; the second thread is configured to prepare the valid data block as a slave side data block in response to the SPI slave device having the valid data block to be exchanged, and send a master side trigger signal to the SPI master device after the slave side data block is prepared to cause the SPI master device to prepare a master side data block; wherein the first thread and the second thread are controlled by a mutex lock.

In an embodiment, the first device is an SPI master device, the second device is an SPI slave device, and the second device has a third sending buffer and a fourth sending buffer; and the first side trigger signal is sent by the second device after writing the second valid data block from the third sending buffer into the fourth sending buffer in response to the second device having the second valid data block to be exchanged.

The present disclosure provides an SPI-based data transmission method applied to an SPI communication system including a first device and a second device, and the method includes: the second device sends a first side trigger signal based on a second valid data block to be exchanged; the second device prepares the second valid data block as a second side data block; the first device receives the first side trigger signal sent by the second device and prepares a first side data block based on the first side trigger signal, the first side data block includes a valid data block or an invalid data block; the first device sends the first side data block to the second device; the second device sends the second side data block to the first device.

In an embodiment, the first device is an SPI master device, the second device is an SPI slave device, and the second device has a third sending buffer and a fourth sending buffer; that the second device prepares the second valid data block as a second side data block includes: the second device writes the second valid data block from the third sending buffer into the fourth sending buffer to prepare the second side data block; that the second device sends a first side trigger signal based on a second valid data block to be exchanged includes: in response to the second device having the second valid data block to be exchanged, the second device sends the first side trigger signal after writing the second valid data block into the fourth sending buffer.

The present disclosure provides a chip including a memory, a processor, and a computer program stored in the memory and executable by the processor, and the processor implements the method according to any one of the embodiments in response to executing the computer program.

The present disclosure provides a computer-readable storage medium storing computer instructions or a program which, in response to run on a computer, the computer to execute the method according to any one of the embodiments.

The present disclosure provides a controller including a first chip and a second chip; wherein the first chip and the second chip are connected by an SPI bus; the second chip is configured to send a first side trigger signal based on a second valid data block to be exchanged; the second chip is further configured to prepare the second valid data block as a second side data block; the first chip is configured to receive the first side trigger signal sent by the second chip and prepare a first side data block based on the first side trigger signal, the first side data block includes a valid data block or an invalid data block; the first chip is further configured to send the first side data block to the second chip; the second chip is further configured to send the second side data block to the first chip.

According to the SPI-based data transmission method provided by the present disclosure, the first side trigger signal sent by the second device in the communication system based on the second valid data block to be exchanged is received, the first side data block is prepared based on the first side trigger signal, in one data interaction process, the first side data block is sent to the second device and the second side data block sent by the second device and corresponding to the second valid data block is received. The exchange of the valid data block can be completed through one data interaction between the first device and the second device, the simultaneous transmission of master side data and slave side data is realized, and the data transmission efficiency is improved.

The additional aspects and advantages of the present disclosure are partially provided in the following description, some of which will become apparent from the following description or learned from practices of the present disclosure.

### BRIEF DESCRIPTION OF THE DRAWINGS

The above and/or additional aspects and advantages of the present disclosure will become apparent and readily appreciated from the description of the embodiments taken in conjunction with the following drawings, in which:
FIG. 1a is a schematic diagram of a standard four-wire SPI provided according to an embodiment of the description;
FIG. 1b is a schematic diagram of a five-wire SPI provided according to an embodiment of the description;
FIG. 1c is a schematic diagram of a six-wire SPI provided according to an embodiment of the description;
FIG. 1d is a schematic diagram of an underlying hardwire connection provided according to an embodiment of the description;
FIG. 1e is a schematic diagram of an SOC side communication framework provided according to an embodiment of the description;
FIG. 1f is a schematic diagram of an MCU side communication framework provided according to an embodiment of the description;
FIG. 1g is a schematic diagram of a framework of a slave device provided according to an embodiment of the description;
FIG. 1h is a schematic diagram of a framework of a master device provided according to an embodiment of the description;
FIG. 2a is a schematic flow diagram of an SPI-based data transmission method provided according to an embodiment of the description;
FIG. 2b is a schematic diagram of the interaction between a master device and a slave device provided according to an embodiment of the description;
FIG. 2c is a schematic diagram of the interaction between a master device and a slave device provided according to an embodiment of the description;
FIG. 3a is a schematic flow diagram of an SPI-based data transmission method provided according to an embodiment of the description;
FIG. 3b is a schematic flow diagram of an SPI-based data transmission method provided according to an embodiment of the description;
FIG. 4a is a schematic flow diagram of an SPI-based data transmission method provided according to an embodiment of the description;
FIG. 4b is a schematic flow diagram of a TO_SLAVE pulse signal reception interrupt processing flow provided according to an embodiment of the description;
FIG. 4c is a schematic flow diagram of the processing flow of a Master side actively triggered data block exchange scenario thread provided according to an embodiment of the description;
FIG. 4d is a schematic flow diagram of the processing flow of a Slave side actively triggered data block exchange scenario thread provided according to an embodiment of the description;
FIG. 5 is a schematic flow diagram of an SPI-based data transmission method provided according to an embodiment of the description;
FIG. 6 is a schematic flow diagram of an SPI-based data transmission method provided according to an embodiment of the description.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

In the multi-domain centralized automotive electronic and electrical architecture, MCU (Microcontroller Unit) is configured to handle software functions that require real-time and security, and SOC (System on Chip) is configured to handle software functions that require computing performance. The MCU and the SOC can be reasonably allocated, with redundant backup, and the above requirements can be taken into account. Ethernet is generally used for communication between the MCU and the SOC to meet the requirements of high communication bandwidth. Meanwhile, for security reasons, other communication methods are between the MCU and the SOC. In general, the underlying hardware between the MCU and the SOC may communicate directly through serial ports, SPI and other methods.

In the related art, some solutions realize active transmission on the SOC side or the MCU side based on the SPI bus; some solutions realize active transmission on both the SOC side and the MCU side. However, the real-time performance is not high enough, or the communication reliability of both ends of the communication is not considered, or there are strong limitations on the length of communication data, or it cannot meet the scenario where the SOC side and the MCU side exchange valid data simultaneously, or it needs to occupy excessive hardware resources (such as pins) to control the data transmission process, or the timing control of the underlying data transmission is too complex.

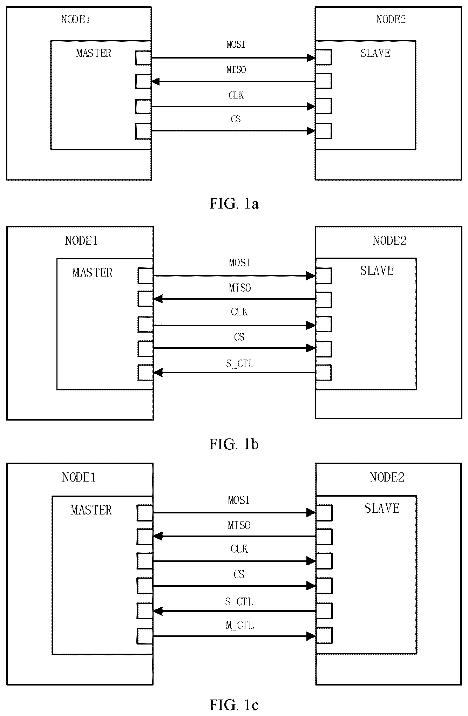

Referring to FIG. 1a, FIG. 1a is a schematic diagram of a standard four-wire SPI. Two nodes (NODE1 and NODE2) are shown in FIG. 1a, the node NODE1 serves as a master side device (MASTER) and the node NODE2 serves as a slave side device (SLAVE). The four-wire SPI cannot achieve real-time exchange of master-slave data. Generally, the master side and slave side data exchange is implemented by SPI master side polling. Although this method consumes less hardware resources (pins), it has the disadvantage of poor real-time performance. MOSI is a master output slave input signal line, MISO is a master input slave output signal line, CLK is a signal line for transmitting a clock signal, and CS is a signal line for transmitting a chip selection signal.

Referring to FIG. 1b, FIG. 1b is a schematic diagram of a five-wire SPI. The five-wire SPI generally adds a control line from the SLAVE side device to the MASTER side device. In response to the MASTER side needing active transmission, the transmission may be actively initiated through the standard four wires of CS, CLK, MOSI, and MISO, but it is impossible to quickly and accurately notify the SLAVE side of the time of transmission initiation. In response to the SLAVE side needing active transmission, the MASTER side may be notified through the S_CTRL control line, but the MASTER side may be preparing to initiate data transmission at this time. Therefore, the five-wire SPI is superior to the four-wire SPI in terms of bidirectional transmission efficiency. Only one control line is added, which does not consume many resources (pins). However, complex logic needs to be added to complete the control of bus conflicts caused by the bidirectional transmission, and bus conflicts will also affect the transmission efficiency.

Referring to FIG. 1c, FIG. 1c is a schematic diagram of a six-wire SPI. The six-wire SPI generally adds a control line from the SLAVE side to the MASTER side and a control line from the MASTER side to the SLAVE side. There are generally two methods for implementing bidirectional real-time transmission with six-wire SPI.

The first method is that in response to the MASTER side needing to send data, the MASTER side notifies the SLAVE side that it is ready through M_CTL. After the SLAVE side prepares the data, the SLAVE side notifies the MASTER side that it is ready through S_CTL, and then the MASTER side initiates the data transmission. In response to the SLAVE side needing to send data, the SLAVE side notifies the MASTER side that it is ready through S_CTL, after the MASTER side prepares the data, the MASTER side notifies the SLAVE side that it is ready through M_CTL, and then the MASTER side initiates the data transmission. In response to the MASTER side and the SLAVE side needing to send data simultaneously, the priority control and the control by state machines on both the MASTER side and the SLAVE side are needed to ensure priority transmission on one side and prevent bus conflict scenarios.

The second method is that in response to the MASTER side needing to send data, the MASTER side notifies the SLAVE side that it is ready through M_CTL, and the MASTER side initiates the data transmission; in response to the SLAVE side needing to send data, the SLAVE side notifies the MASTER side that it is ready through S_CTL, and the MASTER side initiates the data transmission. In response to the MASTER side and the SLAVE side needing to send data simultaneously, the priority control and the control by state machines on both the MASTER side and the SLAVE side are needed to ensure priority transmission on one side and prevent bus conflict scenarios.

The above two methods have higher real-time performance and higher transmission efficiency than the five-wire SPI. However, in the scenario of bidirectional simultaneous transmission, the additional logic control is needed to prevent bus conflicts, and full-duplex real-time transmission cannot be fully achieved.

In addition, there are some solutions in the related art for seven-wire SPI and eight-wire SPI. On the one hand, more control states are added, the complexity of control logic is higher, and the probability of errors is increased; on the other hand, the consumption of hardware resources (pins) is increased.

Therefore, the six-wire SPI is a solution that takes into account resource consumption and real-time bidirectional transmission. However, for bidirectional real-time transmission scenarios, solutions in the related art need to add complex bus conflict control logic to ensure priority transmission on one side. As mentioned in the background, the MASTER side and the SLAVE side need to perform the exchange process of valid data blocks and invalid data blocks twice, so it can be seen that the related art does not realize bidirectional real-time transmission of valid data blocks and valid data blocks.

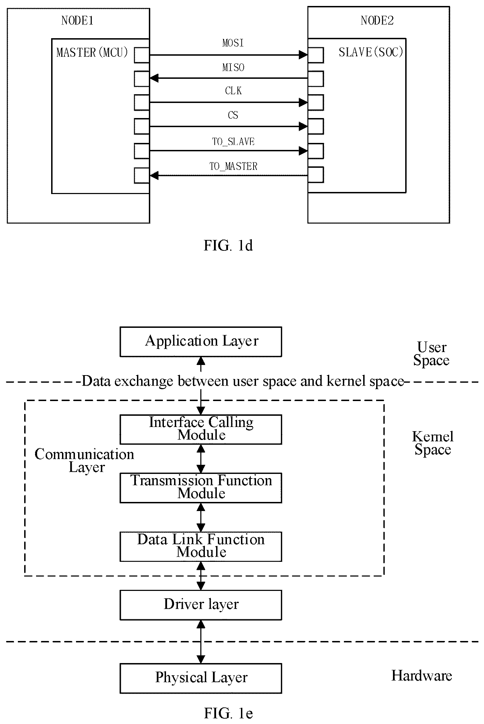

Based on this, the embodiments of the present disclosure optimize the communication timing of the underlying layer, the transmission of valid data blocks and valid data blocks of the master and slave sides is completed in one data interaction process, the real-time data transmission of the master and slave sides is realized, and the data transmission efficiency is improved. Referring to FIG. 1d, FIG. 1d is a schematic diagram of an underlying hardwire connection provided according to an embodiment of the description. It should be noted that the description of the hardwire connection pins in FIG. 1d is shown in Table 1.

**Table 1: Hardwire connection pins description table**

| Pin Name | Pin Function |
|---|---|
| CLK | CLK is a synchronous clock generated by the master for synchronizing data (generated by Master device, provided to Slave device) |
| CS | CS is configured to control whether or not a chip is selected, that is to say, only in response to the chip selection signal being valid, the operation on the chip is valid (generated by the Master device). In the solution, the master and slave controllers are one-to-one, and the slave is in a constantly selected state. |
| MOSI | For transmitting data, directions are: Master device output, Slave device input. |
| MISO | For transmitting data, directions are: Slave device output, Master device input. |
| TO_SLAVE | The pulse signal is configured for the master side to notify the slave side that the master side has data to send. |
| TO_MASTER | The pulse signal is configured for the slave side to notify the master side that the slave side has prepared data, and the master side completes the data preparation and triggers the data exchange after receiving the pulse signal. |

Further, an embodiment of the description also provides a set of SPI-based communication frameworks between the SOC and the MCU. Referring to FIG. 1e, FIG. 1e is a schematic diagram of the SOC side communication framework provided according to an embodiment of the description. The SOC side communication framework is divided into four layers, from bottom to top: physical layer, driver layer, communication layer, and application layer. The communication layer is divided into three modules, from bottom to top: data link function module, transmission function module and interface calling module. Functions implemented by each layer on the SOC side are shown in Table 2.

**Table 2: Description table of functions implemented by each layer on the SOC side**

| Layer | Module | Function |
|---|---|---|
| Physical Layer | - | Convert original bitstream data into an electronic signal suitable for transmission on a physical medium. |
| Driver layer | - | Provide the bitstream data transmission according to the specified interaction timing. |
| Communication Layer | Data Link Module | 1. Provide error-free transmission of data blocks on a communication channel; |
| | | 2. Provide a service of encapsulating data messages into data frames; |
| | | 3. Provide a service of parsing data frames into data messages. |
| | Transmission module | 1. Provide a data message buffer service; |
| | | 2. Provide a non-blocking reliable or unreliable transmission service; |
| | | 3. Provide a multi-channel transmission service according to priority; |
| | Interface Calling Module | Provide an interface for exchanging data between user space and kernel space. |
| Application Layer | - | Encapsulate data transceiving interfaces and provide a fragmented service for the upper-level functional modules. |

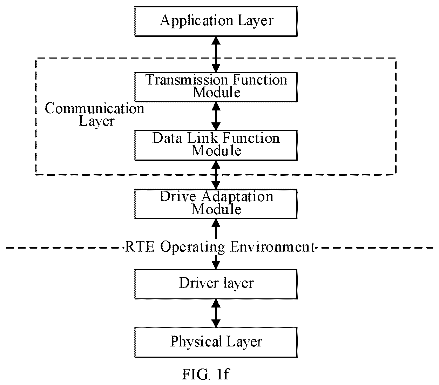

Referring to FIG. 1f, FIG. 1f is a schematic diagram of an MCU side communication framework provided according to an embodiment of the description. The MCU side communication framework is divided into four layers, from bottom to top: physical layer, driver layer, communication layer, and application layer. The communication layer is divided into data link function module and transmission function module from bottom to top. Functions implemented by each layer on the MCU side are shown in Table 3.

**Table 3: Description table of functions implemented by each layer on the MCU side**

| Layer | Module | Function |
|---|---|---|
| Physical Layer | - | Convert original bitstream data into an electronic signal suitable for transmission on a physical medium. |
| Driver layer | - | Provide the bitstream data transmission according to the specified interaction timing. |
| | Driver Adaptation Module | Control the transmission timing to complete the data exchange. |
| Communication Layer | Data Link Module | 1. Provide error-free transmission of data blocks on a communication channel; |
| | | 2. Provide a service of encapsulating data messages into data frames; |
| | | 3. Provide a service of parsing data frames into data messages. |
| | Transmission module | 1. Provide a data message buffer service; |
| | | 2. Provide a non-blocking reliable or unreliable transmission service; |
| | | 3. Provide a multi-channel transmission service according to priority; |
| Application Layer | - | Encapsulate data transceiving interfaces and provide a fragmented service for the upper-level functional modules. |

According to the communication framework in the embodiment of the description, more explicit architectural layering of the communication framework is realized. Based on the communication timing of the underlying layer, the communication framework in the embodiment of the description satisfies the requirement of rapid portability. It should be noted that in the embodiment of the description, the SOC side is the SPI slave side, and the MCU side is the SPI master side. While realizing bidirectional communication between the SOC side and the MCU side, various communication function requirements of the SOC side and the MCU side are satisfied.

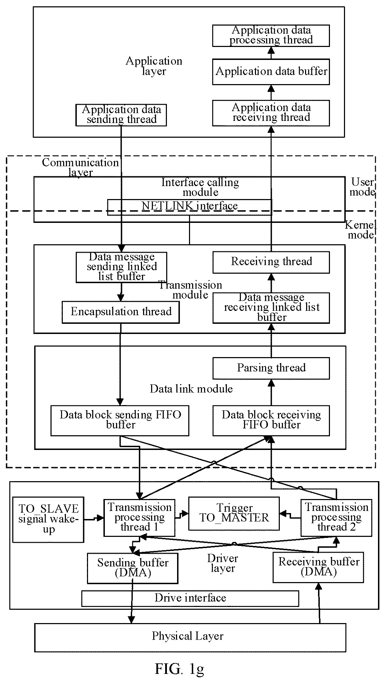

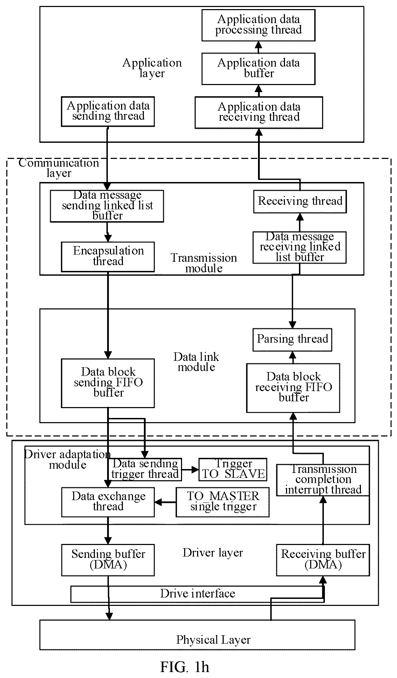

An embodiment of the description provides a scenario example of a SPI-based data transmission method. Referring to FIG. 1g and FIG. 1h, FIG. 1g is a schematic diagram of a framework of a slave device, and FIG. 1h is a schematic diagram of a framework of a master device. In the scenario example, the Slave side can use the SOC and the Master side can use the MCU. The communication layer mainly implements the data link module and the transmission module. For the SOC side, since Linux operating system is adopted, the interface calling module is also needed to complete the data transmission between the user space and the kernel space.

In the scenario example, for the Master side actively triggering exchange timing interaction process, the exchange process of the valid data blocks between the Master side and the Slave side is illustratively described below, including steps (1) to (6):
(1) On the Master side, the application data message is sent to the data message sending linked list buffer of the transmission module of the communication layer through the application data sending thread of the application layer. The application data message is encapsulated through the encapsulation thread of the transmission module to obtain a plurality of valid data blocks, and the valid data block A is written into the data block sending FIFO buffer of the data link module. The sending of the TO_SLAVE signal is triggered through the data sending trigger thread, the TO_SLAVE signal is sent to the Slave side, and the Slave side receives the TO_SLAVE signal, and wakes up the transmission thread 1.
(2) On the Slave side, the valid data block B in the data block sending FIFO buffer is written into the sending buffer (DMA) of the driver layer through the transmission thread 1; After the Slave side completes the preparation of the valid data block B, the Slave side sends the TO_MASTER signal to the Master side through the transmission thread 1.
(3) On the Master side, the TO_MASTER signal is received through the data exchange thread, and the valid data block A in the data block sending FIFO buffer of the data link module is written into the sending buffer (DMA) of the driver layer through the data exchange thread. The valid data block A is sent to the Slave side through the drive interface on the Master side.
(4) On the Slave side, the valid data block A is written into the receiving buffer (DMA) on the Slave side through the drive interface on the Slave side. Through the transmission thread 1, the valid data block A is written from the receiving buffer (DMA) of the driver layer on the Slave side into the data block receiving FIFO buffer of the data link module on the Slave side. The valid data block A is parsed through the parsing thread of the data link module, the parsed data message is written into the data message receiving linked list buffer of the transmission module on the Slave side, and written into the application data buffer through the receiving thread of the transmission module, the interface calling module and the application data receiving thread, and provided to the application data processing thread for processing.
(5) While the Slave side receives the valid data block A, on the Slave side, the valid data block B is sent to the Master side through the drive interface on the Slave side.
(6) On the Master side, the valid data block B is written into the receiving buffer (DMA) on the Master side through the drive interface on the Master side. Through the transmission completion interrupt thread, the valid data block B is written from the receiving buffer (DMA) of the driver layer on the Master side into the data block receiving FIFO buffer of the data link module on the Master side. The valid data block B is parsed through the parsing thread of the data link module, and the parsed data message is written into the data message receiving linked list buffer of the transmission module on the Master side, and written into the application data buffer through the receiving thread of the transmission module and the application data receiving thread, and provided to the application data processing thread for processing.

In the scenario example, for the Slave side actively triggering exchange timing interaction process, the exchange process of the valid data blocks between the Slave side and the Master side is illustratively described below, including steps (1) to (5):
(1) On the Slave side, the application data message is sent to the data message sending linked list buffer of the transmission module of the communication layer through the application data sending thread of the application layer. The application data message is encapsulated through the encapsulation thread of the transmission module to obtain a plurality of valid data blocks, and the valid data block X is written into the data block sending FIFO buffer of the data link module. The valid data block X in the data block sending FIFO buffer is written into the sending buffer (DMA) of the driver layer through the transmission thread 2. The sending of the TO_MASTER signal is triggered through the transmission thread 2, the TO_MASTER signal is sent to the Master side, and the Master side receives the TO_MASTER signal, and wakes up the data exchange thread.
(2) On the Master side, the valid data block Y in the data block sending FIFO buffer of the data link module is written into the sending buffer (DMA) of the driver layer through the data exchange thread. The valid data block Y is sent to the Slave side through the drive interface on the Master side.
(3) On the Slave side, the valid data block Y is received to the receiving buffer (DMA) of the driver layer on the Slave side through the transmission thread 2, while the valid data block X in the sending buffer (DMA) of the driver layer on the Slave side is sent to the Master side through the drive interface on the Slave side.
(4) On the Master side, the valid data block X is written into the receiving buffer (DMA) on the Master side through the drive interface on the Master side. Through the transmission completion interrupt thread, the valid data block X is written from the receiving buffer (DMA) of the driver layer on the Master side into the data block receiving FIFO buffer of the data link module on the Master side. The valid data block X is parsed through the parsing thread of the data link module, and the parsed data message is written into the data message receiving linked list buffer of the transmission module on the Master side, and written into the application data buffer through the receiving thread of the transmission module and the application data receiving thread, and provided to the application data processing thread for processing.
(5) On the Slave side, the valid data block Y is written from the receiving buffer (DMA) of the driver layer on the Slave side into the data block receiving FIFO buffer of the data link module on the Slave side through the transmission thread 2. The valid data block Y is parsed through the parsing thread of the data link module, the parsed data message is written into the data message receiving linked list buffer of the transmission module on the Slave side, and written into the application data buffer through the receiving thread of the transmission module, the interface calling module and the application data receiving thread, and provided to the application data processing thread for processing.

It should be noted that SPI is the abbreviation of Serial Peripheral Interface, namely serial peripheral interface. It is a high-speed, full-duplex, synchronous communication bus that can be configured for communication between chips. MCU is the abbreviation of Microcontroller Unit, namely microcontroller unit. In automotive domain controllers, the MCU is generally configured to implement functions that require real-time and security. The SOC is the abbreviation of System on Chip, namely system on chip. In automotive domain controllers, the SOC is generally configured to implement functions that require computing performance and communication performance.

In the scenario example, the data message refers to the application layer data buffered in the transmission module. The data message buffered in the transmission module is encapsulated in the frame format as a data frame. The acknowledgement information is encapsulated in the frame format as an acknowledgement frame. The fixed data configured to pad the remaining space of the data block is encapsulated in the frame format as a padding frame. In the scenario example, the driver layer data exchange is fixed-length, and the data frame, the acknowledgement frame, and the padding frame can be written into a fixed-length storage space to form a data block. It should be noted that the data message is the concept of the transmission module, and the data frame, the acknowledgement frame, the padding frame, and the data block are the concepts of the data link module.

In the scenario example, the sending and receiving buffers of the data link module are configured to buffer the sent and received 1280-byte data blocks. There is a data block buffer for receiving and a data block buffer for sending, respectively. The data block buffer is a first-in, first-out cyclic queue with a tentative queue depth of 12, which can store 12 1280-byte data blocks simultaneously. The sending and receiving buffers of the driver layer will perform data interaction with the sending and receiving buffers (of the data link module).

In the scenario example, on the one hand, a new SPI underlying communication timing control method is implemented based on the two newly added GPIO pins and driver layer code logic, and the timing control method has a simple logic and can avoid conflicts that may be caused by simultaneous triggering of transmission on the master side and the slave side. On the other hand, a set of inter-chip communication framework between the SOC side and the MCU side is implemented based on the underlying SPI communication, which can provide a fragmented transmission service for longer data. Moreover, the framework has the characteristics of clear layering, simple interface, and good portability and scalability.

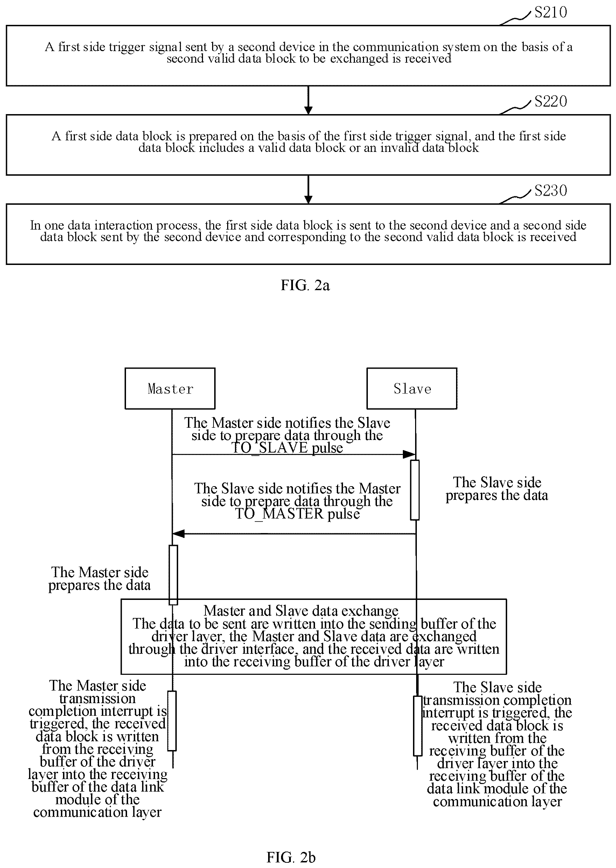

An embodiment of the description provides an SPI-based data transmission method applied to a first device of an SPI communication system. Referring to FIG. 2a, the SPI-based data transmission method may include the following steps.

S210. A first side trigger signal sent by a second device in the communication system based on a second valid data block to be exchanged is received.

S220. A first side data block is prepared based on the first side trigger signal, and the first side data block includes a valid data block or an invalid data block.

S230. In one data interaction process, the first side data block is sent to the second device and a second side data block sent by the second device and corresponding to the second valid data block is received.

The communication system includes a first device and a second device. The first device serves as the side that passively receives data. Specifically, the second device has the second valid data block to be exchanged, and the second device sends the first side trigger signal to the first device based on the second valid data block. The first device receives the first side trigger signal and prepares the first side data block based on the first side trigger signal. After the first device prepares the first side data block, the first device and the second device begin to jointly perform one data interaction process. In one data interaction process, the first device sends the first side data block to the second device, and simultaneously receives the second side data block sent by the second device and corresponding to the second valid data block. It should be noted that in response to the first device having the valid data block to be exchanged, the valid data block to be exchanged is prepared as the first side data block, and therefore, in one data interaction process, the data exchange between the valid first side data block and the valid second side data block is realized between the first device and the second device. In response to the first device not having the valid data block to be exchanged, the invalid data block is prepared as the first side data block. It can be seen that, in the embodiment, in one data interaction process, only in response to the first device not having the valid data block to be exchanged, the data exchange between the invalid data block and the valid second side data block is performed between the first device and the second device.

In the embodiment, the SPI communication system includes a master device and a slave device. The SPI communication system corresponds to three scenarios, a scenario where the Master device (Master side) actively triggers the data block exchange, a scenario where the Slave device (Slave side) actively triggers the data block exchange, and a scenario where the Master side and the Slave side simultaneously trigger the data block exchange, respectively. The following describes the SPI-based data transmission process for different scenarios. The first device in the embodiment of the description can be understood as the side that passively receives data. For example, in the scenario where the Master side actively triggers the data block exchange and in the scenario where the Master side and the Slave side simultaneously trigger the data block exchange, the first device may be regarded as the Slave device. In the scenario where the Slave side actively triggers the data block exchange, the first device may be regarded as the master device.

Referring to FIG. 2b, for the scenario where the Master side actively triggers the data block exchange, the second device may be regarded as the Master device, and the first device may be regarded as the slave device. Specifically, in response to the master device having the second valid data block to be exchanged, the master device sends the first side trigger signal to the slave device, and the slave device receives the first side trigger signal. The slave device prepares the first side data block for data interaction based on the first side trigger signal. It should be noted that in response to the slave device having the valid data block to be exchanged, the valid data block to be exchanged is prepared as the first side data block. In response to the slave device not having the valid data block to be exchanged, the invalid data block is prepared as the first side data block. It can be seen that the first side data block includes the valid data block or the invalid data block. After completing the first side data block, in one data interaction process, the slave device sends the first side data block to the master device, and receives the second side data block sent by the master device and corresponding to the second valid data block. It can be seen that in one data interaction process, the exchange of valid data blocks between the master device and the slave device is realized, the number of data exchanges between the master device and the slave device is reduced, and the data transmission efficiency is improved. It should be noted that for the scenario where the Master side actively triggers the data block exchange, the first side trigger signal may be regarded as the TO_ SLAVE pulse signal.

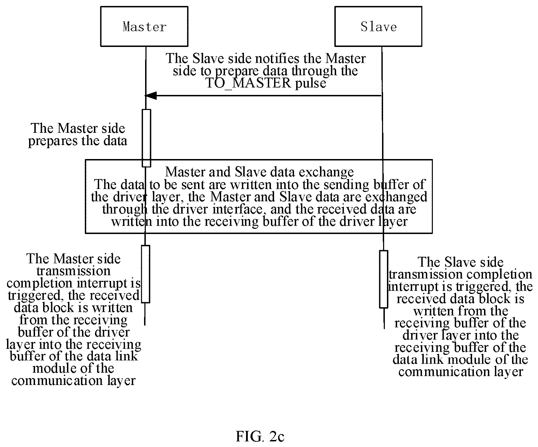

Referring to FIG. 2c, for the scenario where the Slave side actively triggers the data block exchange, the first device may be regarded as the Master device, and the second device may be regarded as the slave device. Specifically, the slave device prepares the second valid data block to be exchanged, the slave device sends the first side trigger signal to the Master device, and the Master device receives the first side trigger signal. The Master device prepares the first side data block for data interaction based on the first side trigger signal. It should be noted that in response to the Master device having the valid data block to be exchanged, the valid data block to be exchanged is prepared as the first side data block. In response to the Master device not having the valid data block to be exchanged, the invalid data block is prepared as the first side data block. It can be seen that the first side data block includes the valid data block or the invalid data block. After completing the first side data block, in one data interaction process, the Master device sends the first side data block to the Slave device, and receives the second side data block sent by the Slave device and corresponding to the second valid data block. It can be seen that in one data interaction process, the exchange of valid data blocks between the master device and the slave device is realized, the number of data exchanges between the master device and the slave device is reduced, and the data transmission efficiency is improved. It should be noted that for the scenario where the Slave side actively triggers the data block exchange, the first side trigger signal may be regarded as the TO_MASTER pulse signal.

For the scenario where the Master side and the Slave side simultaneously trigger the data block exchange, the scenario where the Master side and the Slave side simultaneously trigger the data block exchange is the same as the scenario where the Master side actively triggers the data block exchange, the data interaction process and timing are the same and are not repeated here.

According to the SPI-based data transmission method, the data exchange between the first device and the second device can be completed through one data interaction, and simultaneous transmission of the master data and the slave data is realized. The timing control logic is simple and there is no bus conflict issue.

In some embodiments, that the first side data block is prepared based on the first side trigger signal may include: in response to the first side trigger signal, it being determined whether or not the first device has the first valid data block to be exchanged; the first valid data block is prepared as the first side data block if the first device has the first valid data block; the invalid data block is prepared as the first side data block if the first device does not have the first valid data block.

Specifically, in response to the first device receiving the first side trigger signal sent by the second device, the first device determines whether or not the sending buffer has data, and if the sending buffer has the data, it indicates that the first device has the first valid data block to be exchanged. If the sending buffer does not have the data, it indicates that the first device does not have the first valid data block to be exchanged. If the first device has the first valid data block, the first device prepares the first valid data block as the first side data block. If the first device does not have the first valid data block, the first device prepares the invalid data block as the first side data block.

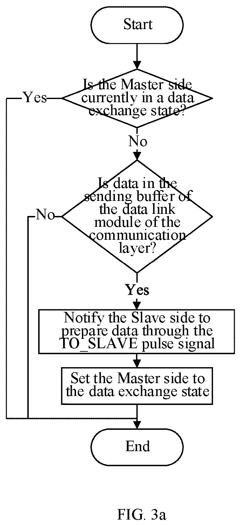

Referring to FIG. 3a, for the scenario where the Master side actively triggers the data block exchange, the second device may be regarded as the master device, and the first device may be regarded as the slave device. The first side trigger signal may be regarded as the TO_SLAVE pulse signal. Specifically, in the scenario where the Master side is idle with a data block to be sent, the slave device receives the TO_SLAVE pulse signal sent by the master device. The slave device determines whether or not the slave device has the first valid data block to be exchanged in response to the TO_SLAVE pulse signal. If the slave device has the first valid data block, the slave device prepares the first valid data block as the first side data block. If the slave device does not have the first valid data block, the slave device prepares the invalid data block as the first side data block.

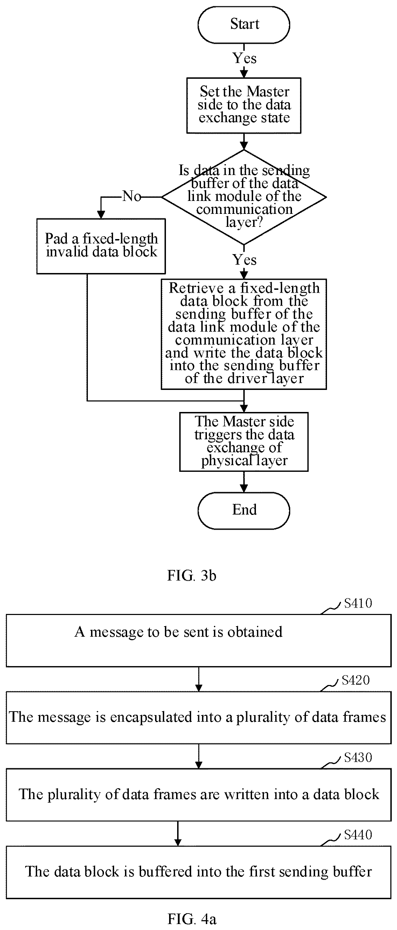

Referring to FIG. 3b, for the scenario where the Slave side actively triggers the data block exchange, the first device may be regarded as the master device, and the second device may be regarded as the slave device, and the first side trigger signal may be regarded as the TO_MASTER pulse signal. Specifically, the master device receives the TO_MASTER pulse signal sent by the slave device. The master device determines whether or not the master device has the first valid data block to be exchanged in response to the TO_MASTER pulse signal. If the master device has the first valid data block, the master device prepares the first valid data block as the first side data block. If the master device does not have the first valid data block, the master device prepares the invalid data block as the first side data block.

In the embodiment, in response to the first device having the valid data block to be exchanged, the valid data block to be exchanged is prepared as the first side data block, and therefore, in one data interaction process, the data exchange between the valid first side data block and the valid second side data block is realized between the first device and the second device. Only in response to the first device not having the valid data block to be exchanged, is the data exchange between the invalid data block and the valid second side data block performed between the first device and the second device. The data transmission process is simplified and the data transmission efficiency is improved.

In some embodiments, the first device has a first sending buffer and a second sending buffer; that the first valid data block is prepared as the first side data block includes: writing the first valid data block from the first sending buffer into the second sending buffer to prepare the first side data block.

Specifically, the first device has the first sending buffer and the second sending buffer. The first valid data block is stored in the first sending buffer of the first device, and in response to the first side trigger signal, the first device writes the first valid data block in the first sending buffer into the second sending buffer to prepare the first side data block for sending to the second device.

For the scenario where the Master side actively triggers the data block exchange, the second device may be regarded as the master device, and the first device may be regarded as the slave device. The first side trigger signal may be regarded as the TO_SLAVE pulse signal. The slave device has the driver layer and the data link module, the data link module has the first sending buffer, and the driver layer has the second sending buffer. The first sending buffer of the data link module has the first valid data block, and in response to the TO_SLAVE pulse signal, the slave device writes the first valid data block from the first sending buffer of the data link module into the second sending buffer of the driver layer to prepare the first side data block for sending to the master device.

For the scenario where the Slave side actively triggers the data block exchange, the first device may be regarded as the master device, and the second device may be regarded as the slave device. The first side trigger signal may be regarded as the TO_MASTER pulse signal. Specifically, the master device has the driver layer and the data link module, the data link module has the first sending buffer, and the driver layer has the second sending buffer. The first sending buffer of the data link module has the first valid data block, and in response to the TO_MASTER pulse signal, the master device writes the first valid data block from the first sending buffer of the data link module into the second sending buffer of the driver layer to prepare the first side data block for sending to the slave device.

In the embodiment, in response to the first device having the valid data block to be exchanged, the valid data block to be exchanged is prepared as the first side data block, and therefore, in one data interaction process, the data exchange between the valid first side data block and the valid second side data block is realized between the first device and the second device.

In some embodiments, that the invalid data block is prepared as the first side data block includes: writing the invalid data block of a preset length into the second sending buffer to prepare the first side data block.

Specifically, the exchange of data blocks of the preset length may be completed between the first device and the second device. Since the first sending buffer of the first device does not have data, custom invalid characters may be padded into the data block in the second sending buffer according to the preset length, that is, the invalid data block of the preset length is written into the second sending buffer. The first device prepares the invalid data block of the preset length as the first side data block.

For the scenario where the Master side actively triggers the data block exchange, the second device may be regarded as the master device, and the first device may be regarded as the slave device. The first side trigger signal may be regarded as the TO_SLAVE pulse signal. The slave device has the driver layer and the data link module, the data link module has the first sending buffer, and the driver layer has the second sending buffer. The first sending buffer of the data link module does not have the first valid data block, and in response to the TO_SLAVE pulse signal, the slave device writes the invalid data block of the preset length into the second sending buffer to prepare the first side data block for sending to the master device.

For the scenario where the Slave side actively triggers the data block exchange, the first device may be regarded as the master device, and the second device may be regarded as the slave device. The first side trigger signal may be regarded as the TO_MASTER pulse signal. Specifically, the master device has the driver layer and the data link module, the data link module has the first sending buffer, and the driver layer has the second sending buffer. The first sending buffer of the data link module does not have the first valid data block, and in response to the TO_MASTER pulse signal, the master device writes the invalid data block of the preset length into the second sending buffer to prepare the first side data block for sending to the slave device.

In the embodiment, only in response to the first device not having the valid data block to be exchanged, the data exchange between the invalid data block and the valid second side data block is performed between the first device and the second device. The data transmission process is simplified and the data transmission efficiency is improved.

In some embodiments, that it is determined whether or not the first device has the first valid data block to be exchanged includes: it is determined whether or not the first sending buffer has the first valid data block; if the first sending buffer has the first valid data block, it is determined that the first device has the first valid data block to be exchanged; if the first sending buffer does not have the first valid data block, it is determined that the first device does not have the first valid data block to be exchanged.

Specifically, the first device has the first sending buffer and the second sending buffer. In response to the first device receiving the first side trigger signal sent by the second device, the first device determines whether or not the first sending buffer has data, and if the first sending buffer has the data, it indicates that the first device has the first valid data block to be exchanged. If the first sending buffer does not have the data, it indicates that the first device does not have the first valid data block to be exchanged.

For the scenario where the Master side actively triggers the data block exchange, the second device may be regarded as the master device, and the first device may be regarded as the slave device. The first side trigger signal may be regarded as the TO_SLAVE pulse signal. The slave device has the data link module, and the data link module has the first sending buffer. In response to the TO_SLAVE pulse signal, the slave device determines whether or not the first sending buffer of the data link module has the first valid data block. If the first sending buffer of the data link module has the first valid data block, it is determined that the slave device has the first valid data block to be exchanged. If the first sending buffer of the data link module does not have the first valid data block, it is determined that the slave device does not have the first valid data block to be exchanged.

For the scenario where the Slave side actively triggers the data block exchange, the first device may be regarded as the master device, and the second device may be regarded as the slave device. The first side trigger signal may be regarded as the TO_MASTER pulse signal. Specifically, the Master device has data link module, the data link module has the first sending buffer. In response to the TO_MASTER pulse signal, the Master device determines whether or not the first sending buffer of the data link module has the first valid data block. If the first sending buffer of the data link module has the first valid data block, it is determined that the master device has the first valid data block to be exchanged. If the first sending buffer of the data link module does not have the first valid data block, it is determined that the master device does not have the first valid data block to be exchanged.

In some embodiments, before the first valid data block is written from the first sending buffer into the second sending buffer, referring to FIG. 4a, the method may further include the following steps:
S410. A message to be sent is obtained.
S420. The message is encapsulated into a plurality of data frames.
S430. The plurality of data frames are written into a data block.
S440. The data block is buffered into the first sending buffer.

The communication layer of the first device includes the data link module and the transmission module. The transmission module has the data message sending linked list buffer, and the data link module has a first sending buffer. The data message of the application layer is sent to the data link layer. The data message sending linked list buffer is configured to buffer the data message to be sent. The data link module encapsulates the data message to be sent into the data frame, writes the data frame into the data block, and writes the data block into the first sending buffer of the data link module.

Exemplarily, the driver layer may complete the exchange of 1280-byte data blocks at a time. The size of the sending and receiving buffers of the driver layer may be 1280 bytes. The 1280-byte data block will be filled with the message frames (data frames or acknowledgement frames) first until the 1280 bytes are just filled. In response to the 1280 bytes not being fully filled, the invalid frames or the invalid data will be filled according to the remaining space size. The driver layer sending and receiving data distribution scenarios are shown in the following table:

| Scenario | Buffer Data Distribution | Detailed Description |
|---|---|---|
| No data to send | Padding frame | A 1280-byte padding frame is written in the buffer |
| Data to be sent, the data frame fully fills the buffer | Data frame + Acknowledgement frame | The data frames and the acknowledgement frames are written in the buffer to fully fill 1280 bytes |
| Data to be sent, the | Data frame + | The data frames and the |
| data frame does not fully fill the buffer, and the remaining space is greater than the minimum frame length | Acknowledgement frame + Padding frame | acknowledgement frames are written in the buffer, occupying a buffer length of less than or equal to 1268 bytes. Finally, a padding frame is written in the remaining space of the buffer. (minimum frame length is 12 bytes) |
| Data to be sent, the data frame does not fully fill the buffer, and the remaining space is less than the minimum frame length | Data frame + Acknowledgement frame + Invalid data padding | The data frames and the acknowledgement frames are written in the buffer, occupying a buffer length of greater than 1268 bytes and less than 1280 bytes. Finally, 0xFF is written in the remaining space of the buffer for padding. |

For the scenario where the Master side actively triggers the data block exchange, the second device may be regarded as the master device, and the first device may be regarded as the slave device. Specifically, the communication layer of the slave device includes the data link module and the transmission module, and the transmission module of the slave device has the data message sending linked list buffer. The data link module of the slave device has the first sending buffer, the slave device encapsulates the data message to be sent into the data frame, writes the data frame into the data block, and writes the data block into the first sending buffer of the data link module of the slave device.

For the scenario where the Slave side actively triggers the data block exchange, the first device may be regarded as the master device, and the second device may be regarded as the slave device. Specifically, the communication layer of the master device includes the data link module and the transmission module, and the transmission module of the master device has the data message sending linked list buffer. The data link module of the master device has the first sending buffer, the master device encapsulates the data message to be sent into the data frame, writes the data frame into the data block, and writes the data block into the first sending buffer of the data link module of the master device.

In some embodiments, the first device further has the first receiving buffer and the second receiving buffer; that the second side data block sent by the second device and corresponding to the second valid data block is received includes: receiving the second side data block to the first receiving buffer; writing the second side data block in the first receiving buffer into the second receiving buffer.

Specifically, the first device has the first receiving buffer and the second receiving buffer. The second device sends the second side data block to the first device, the first device receives the second side data block and writes the second side data block into the first receiving buffer of the first device, and the first device writes the second side data block in the first receiving buffer to the second receiving buffer.

For the scenario where the Master side actively triggers the data block exchange, the second device may be regarded as the master device, and the first device may be regarded as the slave device. The slave device has the driver layer and the data link module, the data link module has the second receiving buffer, and the driver layer has the first receiving buffer. The master device sends the second side data block to the slave device, the slave device receives the second side data block to the first receiving buffer of the driver layer, and writes the second side data block from the first receiving buffer of the driver layer into the second receiving buffer of the data link module.

For the scenario where the Slave side actively triggers the data block exchange, the first device may be regarded as the master device, and the second device may be regarded as the slave device. The master device has the driver layer and the data link module, the data link module has the second receiving buffer, and the driver layer has the first receiving buffer. The slave device sends the second side data block to the master device, the master device receives the second side data block to the first receiving buffer of the driver layer, and writes the second side data block from the first receiving buffer of the driver layer into the second receiving buffer of the data link module.

In some embodiments, the method further includes: clearing the second sending buffer and the first receiving buffer in response to writing the second side data block into the second receiving buffer being completed.

Specifically, the first device sends the first side data block to the second device, at the same time, the first device receives the second side data block sent by the second device. The first device writes the second side data block into the second receiving buffer of the first device. If writing the second side data block into the second receiving buffer is completed, it indicates that the first device has completed receiving the second side data block sent by the second device, that is, the exchange of the data block between the first device and the second device has been completed, and the first receiving buffer and the second sending buffer can be cleared.

For the scenario where the Master side actively triggers the data block exchange, the second device may be regarded as the master device, and the first device may be regarded as the slave device. The slave device has the driver layer and the data link module, the data link module has the first sending buffer and the second receiving buffer, and the driver layer has the second sending buffer and the first receiving buffer. The first sending buffer of the data link module has the first valid data block, and in response to the TO_SLAVE pulse signal, the slave device writes the first valid data block from the first sending buffer of the data link module into the second sending buffer of the driver layer, and the slave device sends the first side data block in the second sending buffer to the master device. At the same time, the slave device receives the second side data block sent by the master device, the slave device receives the second side data block to the first receiving buffer of the driver layer, and writes the second side data block from the first receiving buffer of the driver layer into the second receiving buffer of the data link module. In response to writing the second side data block into the second receiving buffer being completed, the first side data block in the second sending buffer and the second side data block in the first receiving buffer are cleared.

For the scenario where the Slave side actively triggers the data block exchange, the first device may be regarded as the master device, and the second device may be regarded as the slave device. The master device has the driver layer and the data link module, the data link module has the first sending buffer and the second receiving buffer, and the driver layer has the second sending buffer and the first receiving buffer. The first sending buffer of the data link module has the first valid data block, and in response to the TO_MASTER pulse signal, the master device writes the first valid data block from the first sending buffer of the data link module into the second sending buffer of the driver layer, and the master device sends the first side data block in the second sending buffer to the slave device. At the same time, the master device receives the second side data block sent by the slave device, the master device receives the second side data block to the first receiving buffer of the driver layer, and writes the second side data block from the first receiving buffer of the driver layer into the second receiving buffer of the data link module. In response to writing the second side data block into the second receiving buffer being completed, the first side data block in the second sending buffer and the second side data block in the first receiving buffer are cleared.

In some embodiments, the first device is an SPI slave device and the second device is an SPI master device. After a first side data block is prepared based on the first side trigger signal, the method further includes: sending the second side trigger signal to the second device to cause the second device to prepare the second valid data block as the second side data block.

Specifically, in response to the second device having the second valid data block to be exchanged, the second device sends the first side trigger signal to the first device, and the first device receives the first side trigger signal. The first device prepares the first side data block for data interaction based on the first side trigger signal. After completing the preparation of the first side data block, the first device sends a second side trigger signal to the second device, and the second device prepares the second valid data block as the second side data block based on the second side trigger signal.

Exemplarily, in response to the SPI master device having the second valid data block to be exchanged, the SPI master device sends the TO_SLAVE pulse signal to the SPI slave device, and the SPI slave device receives the TO_SLAVE pulse signal. The SPI slave device prepares the first side data block for data interaction based on the TO_SLAVE pulse signal. After completing the preparation of the first side data block, the SPI slave device sends the TO_MASTER pulse signal to the SPI master device, and the SPI master device prepares the second valid data block as the second side data block based on the TO_MASTER pulse signal.

In some embodiments, in response to it being determined that receiving the second side data block is completed, the method further includes: subtracting one from the current reception count of the first side trigger signal.

In response to it being determined that the first side trigger signal is received, the method further includes: adding one to the current reception count of the first side trigger signal. Correspondingly, that the first side data block is prepared based on the first side trigger signal includes: preparing the first side data block in response to the current reception count of the first side trigger signal being greater than zero.

Specifically, the reception count of the first side trigger signal is recorded in first device. In response to the first device completes receiving the second side data block, the data exchange state of the first device may be released to cause the first device to enter the data preparation state for receiving the data block, and therefore the current reception count of the first side trigger signal is subtracted by one.

In response to the first device determining that the first side trigger signal is received, in order to reduce collisions on the bus, the current reception count of the first side trigger signal is added by one, and the current reception count of the first side trigger signal indicates the data exchange state of the first device. Since the current reception count of the first side trigger signal is greater than 0, it indicates that the first side trigger signal is received, and the first side data block may be prepared.

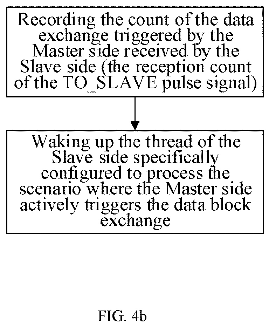

Exemplarily, the Slave side may execute an interrupt processing flow after the data block exchange is completed. Referring to FIG. 4b, FIG. 4b shows the TO_SLAVE pulse signal reception interrupt processing flow. Specifically, it includes: recording the count of the data block exchange triggered by the Master side received by the Slave side, and waking up the thread of the Slave side specifically configured to process the scenario where the Master side actively triggers the data block exchange.

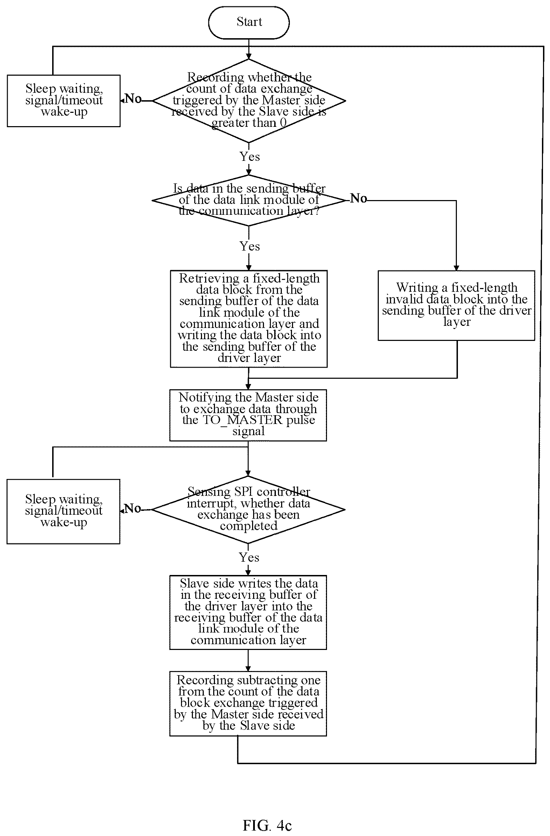

Exemplarily, the Slave side has a Master side actively triggered data block exchange scenario thread, that is, in the scenario where the Master side actively triggers the data block exchange, the thread is responsible for exchanging data blocks with the Master side. Referring to FIG. 4c, FIG. 4c shows the processing flow of the Master side actively triggered data block exchange scenario thread. Specifically, it includes: in response to the Slave side having data, retrieving a fixed-length data block from the data link module of the communication layer and writing the data block into the sending buffer of the driver layer; in response to the Slave side not having data, writing a fixed-length invalid data block into the sending buffer of the driver layer; waiting for the physical layer to complete the exchange of the fixed-length data block; processing and recording the count of the data block exchange triggered by the Master side received by the Slave side (i.e. one exchange is completed, the count needs to be subtracted by one).

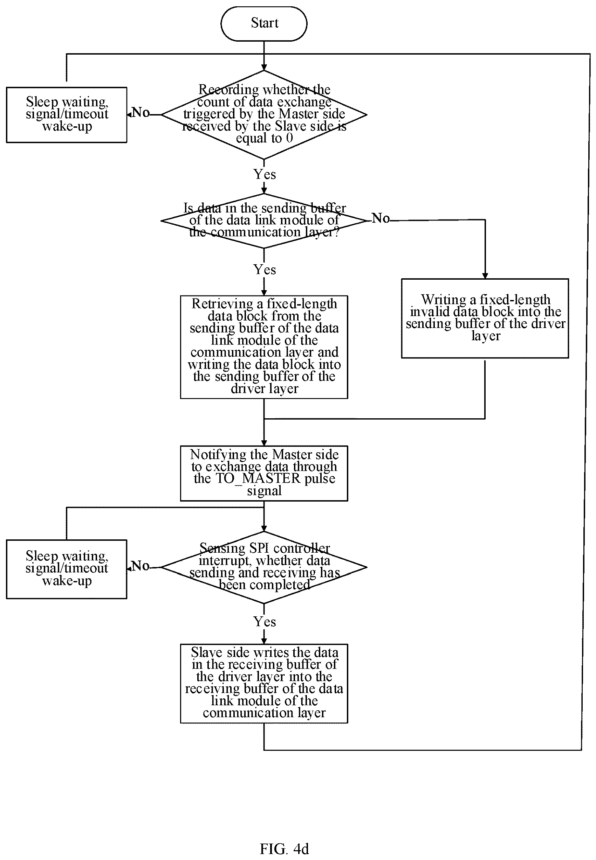

Exemplarily, the Slave side has a Slave side actively triggered data block exchange scenario thread, that is, in the scenario where the Slave side actively triggers the data block exchange, the thread is responsible for exchanging data blocks with the Master side. Referring to FIG. 4d, FIG. 4d shows the processing flow of the Slave side actively triggered data block exchange scenario thread. Specifically, it includes: in response to the Slave side having data, retrieving a fixed-length data block from the data link module of the communication layer and writing the data block into the sending buffer of the driver layer; in response to the Slave side not having data, writing a fixed-length invalid data block into the sending buffer of the driver layer; waiting for the physical layer to complete the exchange of the fixed-length data block.

In some embodiments, the SPI slave is configured with a first thread and a second thread. The first thread is configured to receive the first side trigger signal, prepare the first side data block, send the first side data block, and receive the second side data block. The second thread is configured to prepare the valid data block as the slave side data block in response to the SPI slave device having the valid data block to be exchanged, and send the master side trigger signal to the SPI master device after the slave side data block is prepared to cause the SPI master device to prepare a master side data block; wherein the first thread and the second thread are controlled by a mutex lock.

The SPI Slave device is configured with the first thread for processing the Master side actively triggered data block exchange flow and the second thread for processing the Slave side actively triggered data block exchange flow. In the Master side actively triggered data block exchange flow, the SPI slave device receives the first side trigger signal, prepares the first side data block, sends the first side data block, and receives the second side data block through the first thread. In the Slave side actively triggered data block exchange flow, in response to the SPI Slave device having the valid data block to be exchanged, the SPI Slave device prepares the valid data block as the Slave side data block through the second thread. After preparing the slave side data block, the master side trigger signal is sent to the SPI master device through the second thread to cause the SPI master device to prepare the master side data block based on the master side trigger signal. The first thread and the second thread are controlled by adding the mutex lock to ensure that only one thread can participate in the data block exchange at a time.

In some embodiments, the first device is the SPI master device, the second device is the SPI slave device, and the second device has a third sending buffer and a fourth sending buffer. The first side trigger signal is sent by the second device after writing the second valid data block from the third sending buffer into the fourth sending buffer in response to the second device having the second valid data block to be exchanged.

For the scenario where the Slave side actively triggers the data block exchange, the second device is the SPI slave device, and the first device is the SPI master device. In response to the SPI slave device completing the data preparation, the SPI slave device sends the first side trigger signal to the SPI master device. Specifically, the second device has the third sending buffer and the fourth sending buffer. It is determined whether or not the third sending buffer of the second device has the second valid data block, and if the third sending buffer has the second valid data block, it indicates that the second device has the second valid data block to be exchanged. Further, the second device writes the second valid data block in the third sending buffer into the fourth sending buffer, and at this time, the second device has completed the data preparation, and may send the first side trigger signal to the first device.

Exemplarily, for the scenario where the Slave side actively triggers the data block exchange, the first device may be regarded as the master device, and the second device may be regarded as the slave device. The master device has the driver layer and the data link module, the data link module has the third sending buffer, and the driver layer has the fourth sending buffer. The third sending buffer of the data link module has the second valid data block, and in response to the TO_SLAVE pulse signal, the master device writes the second valid data block from the third sending buffer of the data link module into the fourth sending buffer of the driver layer, and the master device sends the second side data block in the fourth sending buffer to the slave device. At the same time, the master device receives the first side data block sent by the slave device, the master device receives the first side data block to the third receiving buffer of the driver layer, and writes the first side data block from the third receiving buffer of the driver layer into the fourth receiving buffer of the data link module. In response to writing the second side data block into the fourth receiving buffer being completed, the second side data block in the fourth sending buffer and the first side data block in the third receiving buffer are cleared.

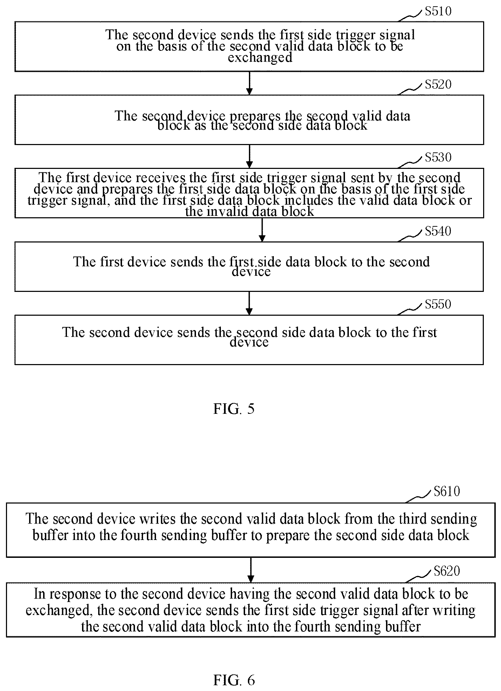

An embodiment of the description provides an SPI-based data transmission method applied to an SPI communication system including a first device and a second device. Referring to FIG. 5, the method may include the following steps.

S510. The second device sends the first side trigger signal based on the second valid data block to be exchanged.

S520. The second device prepares the second valid data block as the second side data block.

S530. The first device receives the first side trigger signal sent by the second device and prepares the first side data block based on the first side trigger signal, and the first side data block includes the valid data block or the invalid data block.

S540. The first device sends the first side data block to the second device.

S550. The second device sends the second side data block to the first device.

In some embodiments, the first device is the SPI master device, the second device is the SPI slave device, and the second device has the third sending buffer and the fourth sending buffer. Referring to FIG. 6, that the second device prepares the second valid data block as the second side data block includes:
S610. The second device writes the second valid data block from the third sending buffer into the fourth sending buffer to prepare the second side data block.

That the second device sends the first side trigger signal based on the second valid data block to be exchanged includes:
S620. In response to the second device having the second valid data block to be exchanged, the second device sends the first side trigger signal after writing the second valid data block into the fourth sending buffer.

The embodiments of the description provide a chip including a memory, a processor, and a computer program stored in the memory and executable by the processor, and the processor implements the method according to any one of the embodiments in response to executing the computer program.

The embodiments of the description provide a computer-readable storage medium storing computer instructions or a program which, in response to run on a computer, the computer to execute the method according to any one of the embodiments.

The embodiments of the description provide a controller including a first chip and a second chip, wherein the first chip and the second chip are connected by an SPI bus.

The second chip is configured to send the first side trigger signal based on the second valid data block to be exchanged.

The second chip is further configured to prepare the second valid data block as the second side data block.

The first chip is configured to receive the first side trigger signal sent by the second chip and prepare a first side data block based on the first side trigger signal, and the first side data block includes the valid data block or the invalid data block.

The first chip is further configured to send the first side data block to the second chip.

The second chip is further configured to send the second side data block to the first chip.

In some embodiments, the layering is clearer and more specific with reference to the Linux network communication framework. In response to the underlying hardware changes, only the relevant codes of the physical layer and driver layer need to be adapted, and the upper communication layer does not need to be changed too much. The upper layer application can select reliable transmission or unreliable transmission according to the actual situation. In the scenario of reliable transmission, the acknowledgement mechanism for messages is introduced. Only messages that have been responded to normally can be removed from the transmission module buffer, otherwise a certain number of retransmission attempts are needed. The upper layer application can configure a plurality of transmission channels with priorities according to the actual situation. The transmission module sequentially retrieves the messages from the transmission channels and sends them sequentially according to the priority levels.

Exemplarily, the communication layer mainly implements the data link module and the transmission module, and for the SOC side, since the Linux operating system is adopted, the interface calling module is also needed to complete the data transmission between the user space and the kernel space. The data link module mainly provides buffering of data blocks, encapsulation and parsing of data blocks and frames, calculation and inspection of frame checksum, and reply of acknowledgement frames. The sending and receiving buffers of the data link module are configured to buffer the sent and received 1280-byte data blocks. In the solution, there is a data block buffer for receiving and a data block buffer for sending, respectively. The data block buffer is a first-in, first-out cyclic queue with a tentative queue depth of 12, which can store 12 1280-byte data blocks simultaneously. The sending and receiving buffers of the driver layer will perform data interaction with the sending and receiving buffers (of the data link module). The data link module encapsulates the data message in the transmission module and the acknowledgement information in the acknowledgement information buffer list into the data frame and the acknowledgement frame respectively, writes the frames into the data block, fills the remaining space, and then writes the whole data block into the sending buffer of the data link module.

Exemplarily, regarding the parsing of the data block and the frame, the data link module retrieves the data block in the receiving buffer, parses the data frame and the acknowledgement frame in the data block, directly discards the padding frame, and then writes the data in the data frame into the buffer of the transmission module. The parsed acknowledgement frame is processed in the transmission module (deleting successfully sent messages or resending failed messages).

The frame format of the data link module is illustrated exemplarily, and in the example, there are three types of frames: data frame, acknowledgement frame, and padding frame. The data frame adds 6 bytes of information before the data payload to identify which application layer service the data belongs to and information related to data fragment.

The data link module message verification is illustrated exemplarily. In response to encapsulating the frame message, it is necessary to calculate the CRC value of the corresponding frame message. The calculation and filling method of the frame header and payload CRC of the data frame, the acknowledgement frame, and the padding frame is shown in the following table.

| Frame Type | HEADER CRC | PAYLOAD CRC |
|---|---|---|
| Data frame | Filling header checksum | Filling checksum of fragment information plus data payload |
| Acknowledgement frame | | Filling checksum of all acknowledgement information pairs |
| Padding frame | | Filling Two Bytes 0xFF |

In response to parsing a frame message, it is necessary to check the CRC value of the corresponding frame message. The check processing of the frame header and payload CRC value of the data frame, the acknowledgement frame, and the padding frame is shown in the following table:

| Frame Type | Whether or not to check header CRC | Frame header CRC check post processing | Whether or not to check payload CRC | Payload CRC check post processing |
|---|---|---|---|---|
| Data frame | Yes | If correct, execute downwards, perform other checks; if wrong, discard this frame and search for the next frame. | Yes | If correct, execute downwards, notify the transmission layer for processing; if wrong, discard this frame, and search for the next frame. If the frame is a reliable frame (a frame that needs reliable transmission), reply with an acknowledgement frame (ACK, NACK) according to the check result, otherwise do not reply. |
| Ackno wledg ement frame | Yes | If correct, execute downwards, perform other checks; if wrong, discard this frame and search for the next frame. | Yes | If correct, execute downwards, notify the transmission layer for processing; if wrong, discard this frame and |
| | | | | search for the next frame. |
| Padding frame | Yes | If correct, execute downwards; if wrong, discard this frame and search for the next frame. | no | - |

It is illustrated exemplarily that the data link module replies with the acknowledgement frame. In response to the data frame message being received, if the data frame is a frame that needs reliable transmission, after parsing processing, regardless of success or failure, it needs to reply with the acknowledgement frame to the sending end (the unreliable transmission data frame message does not need to reply with the acknowledgement frame).

It is illustrated exemplarily that the transmission module provides reliable, real-time data message transmission services to the application layer and the data link module. The transmission module sends the data message to the corresponding priority channel according to the priority of the message, and adds a retransmission mechanism to the data message transmitted in the reliable channel.

The transmission mode is illustrated exemplarily. In the solution, the priority 0 channel is reserved for the transmission of the acknowledgement frame and the padding frame. The priority 1 to priority 31 channels can be used for service data for the transmission of the data message. Based on the reliability of data message transmission, two transmission modes are designed: reliable transmission and unreliable transmission. The priority 1 to priority 31 channels can be configured to use which transmission mode through the is_reliable field. For the unreliable transmission mode, as long as the transmission module encapsulates the data message and writes it into the buffer of the data link module, it is considered that the data message is successfully transmitted, and the data message is removed from the corresponding priority channel of the transmission module. For the reliable transmission mode, after the transmission module writes the data message into the buffer of the data link module, the data message will not be removed from the corresponding priority channel of the transmission module. It must wait for the acknowledgement frame (ACK/NACK frame) replied by the receiving end before further processing. If the ACK frame replied by the receiving end is received, it is considered that the receiving end has successfully received the data packet, and then the data message is removed from the corresponding priority channel of the transmission module. If the NACK frame replied by the receiving end is received, it is considered that an error occurs in response to the receiving end receiving the data message, and at this time, the sending end needs to resend the data message, and after resending more than a certain number of times, the data message is removed from the corresponding priority channel of the transmission module. If the sending end does not receive any acknowledgement frame replied by the receiving end, the sending end resends the data message at regular transmission intervals, and after resending more than a certain number of times, the data message is removed from the corresponding priority channel of the transmission module. The corresponding data message in the corresponding priority channel can be found through the priority and seq num fields in the acknowledgement frame.

The priority transmission is illustrated exemplarily, the transmission module provides a total of 31 data message transmission channels from priority 1 to priority 31, and each channel has a corresponding priority. The priority decreases from 1 to 31 in sequence. The transmission module prioritizes the data message buffered in the transmission channel with high priority. For the data message with high real-time requirements, the data message can be transmitted through the high-priority channel.

The interface calling module is illustrated exemplarily. Since the SOC side adopts Linux operating system, it is necessary to add another interface calling module to implement the data transmission between the user space and the kernel space. The technical solution implements an interface for sending data from the user space to the kernel space and an interface for sending data from the kernel space to the user space through the netlink communication mode, and the data transmission requirements are satisfied.

The application layer is illustrated exemplarily, and the SOC side and the MCU side implement the function of fragment in the application layer. The fragment and recombination of longer data are implemented. In response to longer data being sent, the data are divided according to the maximum transmission length, and the fragment related fields are filled. Four fields need to be filled, the fragment flag (FRAG FLAG), the message ID (MSG ID), the fragment count (FRAG CNT), and the fragment ID (FRAG ID). In response to the fragmented data being received, the fragmented data are buffered in the application layer, and according to these four fields, it is confirmed whether or not the fragments corresponding to the complete message are collected and whether or not the complete data can be transmitted to the upper service.

It will be noted that the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this description, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (an electronic apparatus) having one or more wires, a portable computer diskette (a magnetic apparatus), a random access memory (RAM), a read-only memory (ROM), an erasable programmable read-only memory (EPROM or a flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then stored in a computer memory.

It will be understood that, parts of the present disclosure can be implemented by using hardware, software, firmware, or a combination thereof. In the embodiments, a plurality of steps or methods may be implemented by using software or firmware that are stored in a memory and are executed by a proper instruction execution system. For example, if hardware is used for implementation, same as in another embodiment, implementation may be performed by any one of the following technologies well known in the art or a combination thereof: a discrete logic circuit including a logic gate circuit for implementing a logic function for a data signal, a dedicated integrated circuit including a proper combined logic gate circuit, a programmable gate array (PGA), a field programmable gate array (FPGA), and the like.

In the description, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In the description, exemplary descriptions of the foregoing terms do not necessarily refer to the same embodiment or example. In addition, the described specific features, structures, materials, or characteristics may be combined in a proper manner in any one or more of the embodiments or examples.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person skilled in the art can understand specific meanings of the terms in the present disclosure based on specific situations.

Although the embodiments of the present disclosure have been shown and described above, it can be understood that, the foregoing embodiments are exemplary and should not be understood as limitation to the present disclosure. A person skilled in the art can make changes, modifications, replacements, or variations to the foregoing embodiments within the scope of the present disclosure.

## Claims

1. An SPI-based data transmission method applied to a first device of an SPI communication system, the method comprising:
receiving a first side trigger signal sent by a second device in the communication system based on a second valid data block to be exchanged;
preparing a first side data block based on the first side trigger signal, the first side data block comprising a valid data block or an invalid data block;
in one data interaction process, sending the first side data block to the second device and receiving a second side data block sent by the second device and corresponding to the second valid data block.

2. The method according to claim 1, wherein preparing the first side data block based on the first side trigger signal comprises:
in response to the first side trigger signal, determining whether or not the first device has a first valid data block to be exchanged;
preparing the first valid data block as the first side data block if the first device has the first valid data block;
preparing the invalid data block as the first side data block if the first device does not have the first valid data block.

3. The method according to claim 2, wherein the first device has a first sending buffer and a second sending buffer; preparing the first valid data block as the first side data block comprises:
writing the first valid data block from the first sending buffer into the second sending buffer to prepare the first side data block.

4. The method according to claim 3, wherein preparing the invalid data block as the first side data block comprises:
writing the invalid data block of a preset length into the second sending buffer to prepare the first side data block.

5. The method according to claim 3, wherein determining whether or not the first device has the first valid data block to be exchanged comprises:
determining whether or not the first sending buffer has the first valid data block;
if the first sending buffer has the first valid data block, determining that the first device has the first valid data block to be exchanged;
if the first sending buffer does not have the first valid data block, determining that the first device does not have the first valid data block to be exchanged.

6. The method according to claim 3, before writing the first valid data block from the first sending buffer into the second sending buffer, further comprising:
obtaining a message to be sent;
encapsulating the message into a plurality of data frames;
writing the plurality of data frames into a data block;
buffering the data block into the first sending buffer.

7. The method according to claim 3, wherein the first device further has a first receiving buffer and a second receiving buffer; receiving the second side data block sent by the second device and corresponding to the second valid data block comprises:
receiving the second side data block to the first receiving buffer;
writing the second side data block in the first receiving buffer into the second receiving buffer.

8. The method according to claim 7, further comprising:
clearing the second sending buffer and the first receiving buffer in response to writing the second side data block into the second receiving buffer being completed.

9. The method according to any one of claims 1 to 8, wherein the first device is an SPI slave device and the second device is an SPI master device;
after preparing the first side data block based on the first side trigger signal, the method further comprises:
sending a second side trigger signal to the second device to cause the second device to prepare the second valid data block as the second side data block.

10. The method according to claim 9, wherein in response to it being determined that receiving the second side data block is completed, the method further comprises:
subtracting one from the current reception count of the first side trigger signal;
in response to it being determined that the first side trigger signal is received, the method further comprises:
adding one to the current reception count of the first side trigger signal;
preparing the first side data block based on the first side trigger signal comprising:
preparing the first side data block in response to the current reception count of the first side trigger signal being greater than zero.

11. The method according to claim 9, wherein the SPI slave device is configured with a first thread and a second thread;
the first thread is configured to receive the first side trigger signal, prepare the first side data block, send the first side data block, and receive the second side data block;
the second thread is configured to prepare the valid data block as a slave side data block in response to the SPI slave device having the valid data block to be exchanged, and send a master side trigger signal to the SPI master device after the slave side data block is prepared to cause the SPI master device to prepare a master side data block;
wherein the first thread and the second thread are controlled by a mutex lock.

12. The method according to any one of claims 1 to 8, wherein the first device is an SPI master device, the second device is an SPI slave device, and the second device has a third sending buffer and a fourth sending buffer; and the first side trigger signal is sent by the second device after writing the second valid data block from the third sending buffer into the fourth sending buffer in response to the second device having the second valid data block to be exchanged.

13. An SPI-based data transmission method applied to an SPI communication system comprising a first device and a second device, the method comprising:
the second device sending a first side trigger signal based on a second valid data block to be exchanged;
the second device preparing the second valid data block as a second side data block;
the first device receiving the first side trigger signal sent by the second device and preparing a first side data block based on the first side trigger signal, the first side data block comprising a valid data block or an invalid data block;
the first device sending the first side data block to the second device;
the second device sending the second side data block to the first device.

14. The method according to claim 13, wherein the first device is an SPI master device, the second device is an SPI slave device, and the second device has a third sending buffer and a fourth sending buffer;
the second device preparing the second valid data block as a second side data block comprises:
the second device writing the second valid data block from the third sending buffer into the fourth sending buffer to prepare the second side data block;
the second device sending a first side trigger signal based on a second valid data block to be exchanged comprises:
in response to the second device having the second valid data block to be exchanged, the second device sending the first side trigger signal after writing the second valid data block into the fourth sending buffer.

15. A chip comprising a memory, a processor, and a computer program stored in the memory and executable by the processor, the processor implementing the method according to any one of claims 1 to 12 in response to executing the computer program.

16. A computer-readable storage medium, storing computer instructions or a program which, in response to run on a computer, the computer to execute the method according to any one of claims 1 to 12.

17. A controller comprising a first chip and a second chip; wherein the first chip and the second chip are connected by an SPI bus;
the second chip is configured to send a first side trigger signal based on a second valid data block to be exchanged;
the second chip is further configured to prepare the second valid data block as a second side data block;
the first chip is configured to receive the first side trigger signal sent by the second chip and prepare a first side data block based on the first side trigger signal, the first side data block comprises a valid data block or an invalid data block;
the first chip is further configured to send the first side data block to the second chip;
the second chip is further configured to send the second side data block to the first chip.
